# EUROPEAN PATENT APPLICATION

(11) **EP 2 554 827 A1**
(43) Date of publication of application: **06.02.2013**
(21) Application number: 11762532.7
(22) Date of filing: 10.03.2011
(51) Int. Cl.: F02G 5/04, F01K 23/10, F01N 5/02, F01P 3/20, F02G 5/02

(54) **WASTE HEAT REGENERATION SYSTEM**

(30) Priority: 29.03.2010 JP 2010075152
(71) Applicant: Kabushiki Kaisha Toyota Jidoshokki, Kariya-shi, Aichi 448-8671 (JP)
(72) Inventor: ENOKIJIMA, Fuminobu, Kariya-shi Aichi 448-8671 (JP); MORI, Hidefumi, Kariya-shi Aichi 448-8671 (JP); IGUCHI, Masao, Kariya-shi Aichi 448-8671 (JP)
(74) Representative: TBK
(86) International application number: PCT/JP2011/055648
(87) International publication number: WO 2011/122292

(57) **Abstract**

A waste heat regeneration system includes a pump, a coolant boiler, an exhaust gas boiler, an expander, a first condenser, a gas/liquid separator, and a supercooler. A first flow control valve adjusts the amount of an operating fluid circulating in a first bypass flow path by controlling its opening degree based on a pressure difference P1-P2 corresponding to a temperature difference T1-T2 between the temperature T1 of the operating fluid on the upstream side of the supercooler and the temperature T2 of the operating fluid on the downstream side thereof, thereby maintaining the temperature difference T1-T2 so as to be larger than or equal to a predetermined value necessary for preventing the generation of cavitation in the pump, and ensuring the degree of supercooling.

## Description

### TECHNICAL FIELD

The present invention relates to a waste heat regeneration system, and particularly, to a waste heat regeneration system using a Rankine cycle.

### BACKGROUND ART

A waste heat regeneration system which uses a Rankine cycle device recovering mechanical energy (power) from waste heat of a vehicle engine has been developed. A typical Rankine cycle device includes a pump which pressure-feeds an operating fluid, a heat exchanger which heats the operating fluid through the heat exchange with the waste heat of an engine, an expander which recovers mechanical energy by expanding the heated operating fluid, and a condenser which cools and condenses the expanded operating fluid, and these components are sequentially connected to each other in a ring shape so as to form a closed circuit.

In the waste heat regeneration system mounted on a vehicle, external air of the vehicle is used as a cooling medium for the condenser in many cases. When an abrupt change in the temperature occurs in the external air as the cooling medium, the liquid operating fluid which comes out of the condenser and is suctioned to the pump is boiling, and which may cause cavitation in the pump. When cavitation is generated, the pump does not operate, so the operation of the Rankine cycle is stopped. For this reason, in order to prevent the generation of cavitation in the pump, the operating fluid which is cooled and condensed by the condenser is further cooled so as to become a supercooled (subcooled) state and is suctioned to the pump.

Patent Literature 1 discloses power generating equipment in which a supercooler is installed between a condenser and a liquid feeding pump. Referring to FIG. 1 of Patent Literature 1, in the power generating equipment, the cooling medium used in the supercooler 16 is used in the condenser 14, whereby the temperature of the cooling medium of the condenser 14 is constantly maintained so as to be higher than the temperature of the cooling medium of the supercooler 16. As a result, a difference in the temperature constantly occurs between the operating fluid on the upstream side of the supercooler 16 and the operating fluid on the downstream side thereof, and the operating fluid which comes out of the supercooler 16 and is suctioned to the liquid feeding pump 15 is supercooled.

### CITATION LIST

### PATENT LITERATURE

Patent Literature 1: Japanese Patent Application Laid-Open No. 2004-339965

### DISCLOSURE OF INVENTION

### PROBLEM TO BE SOLVED BY THE INVENTION

However, in the power generating equipment disclosed in Patent Literature 1, the operating fluid which is suctioned to the liquid feeding pump 15 may be supercooled, but the degree of supercooling ensured at that time may not be controlled. For this reason, the degree of supercooling may decrease or increase too much depending on the temperature of the cooling medium. When the degree of supercooling of the operating fluid decreases too much, cavitation is generated, and the operation of the pump becomes unstable. When the degree of supercooling of the operating fluid increases too much, the amount of heat necessary for heating the operating fluid in the heat exchanger increases, and the waste heat regeneration efficiency of the Rankine cycle device is degraded.

The present invention is made to solve these problems, and is aimed at providing a waste heat regeneration system capable of reliably ensuring a degree of supercooling even in a state where it is difficult to ensure a degree of supercolling, and preventing the generation of cavitation in a pump.

### MEANS FOR SOLVING PROBLEM

In order to solve the above-described problems, there is provided a waste heat regeneration system with a Rankine cycle device in which an operating fluid is pressure-fed by a pump, the pressure-fed operating fluid is heated by a heat exchanger with heat of an engine, the heated operating fluid is expanded by an expander so as to recover mechanical energy, and the expanded operating fluid is condensed by a first condenser, the waste heat regeneration system including: a supercooler which is installed on the downstream side of the first condenser and the upstream side of the pump and which supercools the operating fluid; a first bypass flow path which bypasses at least a part of the first condenser; a first opening and closing valve which adjusts the amount of the operating fluid circulating in the first bypass flow path; and a first control unit which controls the opening degree of the first opening and closing valve, wherein the first control unit increases the amount of the operating fluid circulating in the first bypass flow path by controlling the opening degree of the first opening and closing valve as a temperature difference between the temperature of the operating fluid on the upstream side of the supercooler and the temperature of the operating fluid on the downstream side thereof decreases.

### EFFECT OF THE INVENTION

According to the waste heat regeneration system of the present invention, it is possible to reliably ensure a degree of supercooling even in a state where it is difficult to ensure a degree of supercooling, and preventing the generation of cavitation in a pump.

### BRIEF DESCRIPTION OF DRAWINGS

FIG. 1 is a diagram illustrating a configuration of a waste heat regeneration system according to Embodiment 1 of the present invention.
FIG. 2 is a diagram illustrating a configuration of a waste heat regeneration system according to Embodiment 2 of the present invention.
FIG. 3 is a diagram illustrating a configuration of a waste heat regeneration system according to Embodiment 3 of the present invention.
FIG. 4 is a diagram illustrating a configuration of a waste heat regeneration system according to Embodiment 4 of the present invention.

### BEST MODE(S) FOR CARRYING OUT THE INVENTION

Hereafter, embodiments of the present invention will be described by referring to the accompanying drawings.

### Embodiment 1

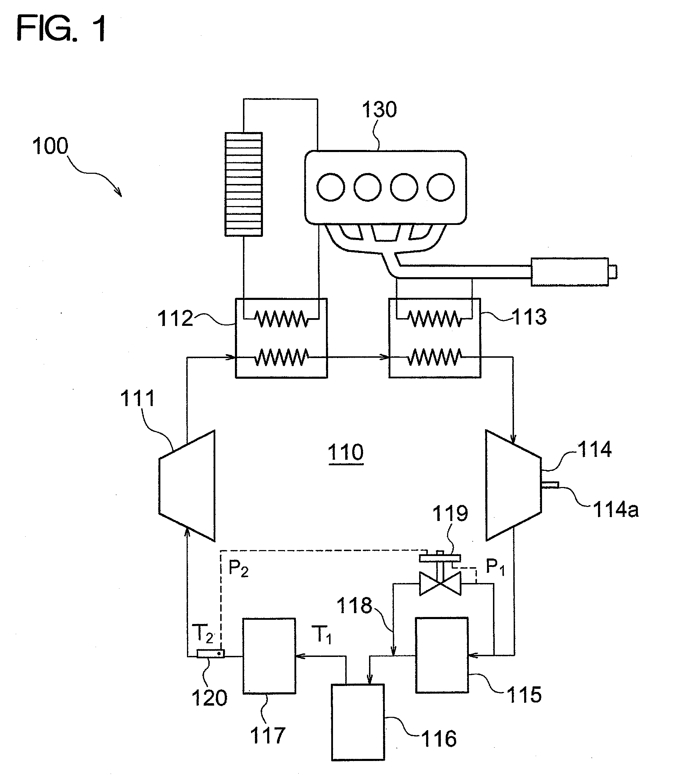

A configuration of a waste heat regeneration system 100 according to Embodiment 1 of the present invention is illustrated in FIG. 1.
The waste heat regeneration system 100 includes a pump 111, a coolant boiler 112, an exhaust gas boiler 113, an expander 114, a first condenser 115, a gas/liquid separator 116, and a supercooler 117, and these components are sequentially connected to each other in a ring shape so as to form a closed circuit 110.

The pump 111 pressure-feeds an operating fluid inside the closed circuit 110. The coolant boiler 112 is a first heat exchanger, and heats the operating fluid through the heat exchange with the coolant of an engine 130. The exhaust gas boiler 113 is a second heat exchanger, and heats the operating fluid through the heat exchange with an exhaust gas discharged from the engine 130. The expander 114 recovers mechanical energy (power) by expanding the operating fluid which is heated and evaporated in the coolant boiler 112 and the exhaust gas boiler 113. The first condenser 115 cools and condenses the expanded operating fluid through the heat exchange with external air. The pump 111, the coolant boiler 112, the exhaust gas boiler 113, the expander 114, and the first condenser 115 become main components in a general Rankine cycle device. Further, waste heat of the engine 130 is a heating medium for the coolant boiler 112 and the exhaust gas boiler 113, and external air is a cooling medium for the first condenser 115.

The gas/liquid separator 116 is used to separate the operating fluid in a gas/liquid mixture state into a gas and a liquid, and the operating fluid which comes out of the gas/liquid separator 116 becomes a saturated liquid state. The supercooler 117 puts the operating fluid in a supercooled (subcooled) state by further cooling (supercooling) the operating fluid in a saturated liquid state through the heat exchange with external air.

Further, an inlet of a first bypass flow path 118 which allows the upstream side and the downstream side of the first condenser 115 to communicate with each other is connected to the downstream side of the expander 114 and the upstream side of the first condenser 115, and an outlet of the first bypass flow path 118 is connected to the downstream side of the first condenser 115 and the upstream side of the gas/liquid separator 116. The first bypass flow path 118 bypasses the entire first condenser 115, and has a pressure loss and a heat exchange rate sufficiently smaller than those of the first condenser 115. Also, a first flow control valve 119 serving as a first opening and closing valve which adjusts the amount of the operating fluid circulates in the first bypass flow path 118 is installed in the first bypass flow path.

The first flow control valve 119 is an existing diaphragm-type flow control valve which includes a mechanism (first control unit) controlling the opening degree of the flow control valve. When two reference pressures are applied to the upper and lower sides of the diaphragm installed inside a valve body, the diaphragm moves up and down due to such a pressure difference, and hence the opening degree of the valve changes. In this Embodiment 1, the pressure P1 on the upstream side of the first condenser 115 and the pressure P2 acquired from a temperature-sensitive tank 120 attached to the pipe on the downstream side of the supercooler 117 are applied as the reference pressures.

Since the operating fluid which comes out of the gas/liquid separator 116 is in a saturated liquid state, a one-to-one relation is established between the temperature and the pressure thereof. Further, the pressure from the downstream side of the expander 114 to the upstream side of the pump 111 is constant. For these reasons, the temperature T1 of the operating fluid on the upstream side of the supercooler 117 may be obtained from the pressure P1 on the upstream side of the first condenser 115.
Further, since it is considered that the temperatures at respective positions of the pipe inside the closed circuit 110 are approximately equal to the temperature of the operating fluid which circulates in that position, the temperature T2 of the operating fluid on the downstream side of the supercooler 117 may be obtained from the pressure P2 acquired from the temperature-sensitive tank 120. That is, the pressure P1 correlates with the temperature T1, and the pressure P2 correlates with the temperature T2. Various fluids may be used as the fluid inside the temperature-sensitive tank 120. In this embodiment, the fluid inside the temperature-sensitive tank 120 is the same as the fluid used in the Rankine cycle device.

The first flow control valve 119 adjusts the amount of the operating fluid which circulates in the first bypass flow path 118 based on the pressure difference P1 - P2 between the pressure P1 corresponding to the temperature T1 of the operating fluid on the upstream side of the supercooler 117 and the pressure P2 corresponding to the temperature T2 of the operating fluid on the downstream side of the supercooler 117. Specifically, when the pressure difference P1 - P2 is larger than a predetermined pressure difference ΔP, the first flow control valve 119 is fully closed so that the amount of the operating fluid circulating in the first bypass flow path 118 becomes zero. When the pressure difference P1 - P2 is smaller than the predetermined pressure difference ΔP, the opening degree is increased so that the amount of the operating fluid circulating in the first bypass flow path 118 increases. Here, the predetermined pressure difference ΔP is set so as to correspond to a predetermined degree of supercooling which is necessary for preventing the generation of cavitation in the pump 111 while maintaining the waste heat regeneration efficiency of the Rankine cycle device. The predetermined degree of supercooling, i.e. the first predetermined value of the temperature difference T1 - T2 on the upstream side and the downstream side of the supercooler 117, is set to 5°C, and the amount of the operating fluid circulating in the first bypass flow path 118 is adjusted so that the temperature difference T1 - T2 is maintained at 5°C or more.

Next, the operation of the waste heat regeneration system 100 according to Embodiment 1 will be described.
When the operation of the Rankine cycle device of the waste heat regeneration system 100 starts, the pump 111 is driven by a driving source (not illustrated), and the operating fluid is pressure-fed toward the downstream side of the pump 111. While the operating fluid which is pressure-fed from the pump 111 circulates in the coolant boiler 112 and the exhaust gas boiler 113, the operating fluid turns into a high-temperature gas by absorbing heat from the coolant of the engine 130 and the exhaust gas discharged from the engine 130, and expands in the expander 114 so as to generate mechanical energy, thereby rotationally driving a driving shaft 114a of the expander 114. An electrical generator (not illustrated) is connected to the driving shaft 114a, and hence the mechanical energy is converted into electrical power.

The operating fluid which comes out of the expander 114 is divided to the first condenser 115 and the first bypass flow path 118 according to the ratio which is determined by the opening degree of the first flow control valve 119. The operating fluid which circulates in the first condenser 115 is cooled and condensed by the heat exchange with the external air. On the other hand, since the heat exchange rate of the first bypass flow path 118 is small, the operating fluid which circulates in the first bypass flow path 118 loses substantially little heat. The operating fluids which circulate in these two paths join at the outlet of the first bypass flow path 118, and the operating fluid is separated into a gas and a liquid in the gas/liquid separator 116. The operating fluid which comes out of the gas/liquid separator 116 and is in a saturated liquid state further flows into the supercooler 117 so as to be further cooled (supercooled), and is suctioned to the pump 111 so as to be pressure-fed toward the coolant boiler 112.

At this time, as described above, when the degree of supercooling, i.e. the temperature difference T1 - T2 of the operating fluid, is larger than the first predetermined value and the relation of P1 - P2 > ΔP is established, the first flow control valve 119 is fully closed, so that the amount of the operating fluid which circulates in the first bypass flow path 118 becomes zero. As a result, the amount of the operating fluid which is cooled and condensed while circulating in the first condenser 115 increases, so that the temperature T1 decreases and the temperature difference T1 - T2 decreases.
On the other hand, when the temperature difference T1 - T2 is smaller than the first predetermined value and the relation of P1 - P2 < ΔP is established, the first flow control valve 119 increases its opening degree so as to increase the amount of the operating fluid which circulates in the first bypass flow path 118. As a result, the amount of the operating fluid which is cooled and condensed while circulating in the first condenser 115 decreases, so that the temperature T1 increases and the temperature difference T1 - T2 increases.
Accordingly, even when the temperature of the external air as the cooling medium of the first condenser 115 changes and the temperature T1 of the operating fluid on the upstream side of the supercooler 117 and the temperature T2 of the operating fluid on the downstream side thereof change, the temperature difference T1 - T2 is constantly maintained at a first predetermined value or more. In other words, the operating fluid which comes out of the supercooler 117 and is suctioned to the pump 111 constantly has a first predetermined degree of supercooling or more.

As described above, in the waste heat regeneration system 100 according to Embodiment 1, the first flow control valve 119 ensures a degree of supercooling larger than or equal to the first predetermined value which is necessary for preventing the generation of cavitation in the pump 111 by adjusting the amount of the operating fluid circulating in the first bypass flow path 118 through the control of its opening degree based on the pressure difference P1 - P2 corresponding to the temperature difference T1 - T2 between the temperature T1 of the operating fluid on the upstream side of the supercooler 117 and the temperature T2 of the operating fluid on the downstream side thereof. Accordingly, the generation of cavitation in the pump 111 is prevented.

Further, since the flow amount of the operating fluid is adjusted based on the pressure difference P1 - P2 corresponding to the temperature difference T1 - T2 of the operating fluid by using the diaphragm-type flow control valve 119, there is no need to prepare, for example, a temperature sensor or a microcomputer controlling the opening degree of the valve, and the configuration of the waste heat regeneration system is simplified.
Further, since the temperature T1 of the operating fluid may be obtained based on the pressure at an arbitrary position between the downstream side of the expander 114 and the upstream side of the pump 111, the degree of freedom in the temperature detection position is high.
Furthermore, since the pipe 118 and the flow control valve 119 are only added to an existing Rankine cycle device with a supercooler, it is possible to save space and reduce cost.

### Embodiment 2

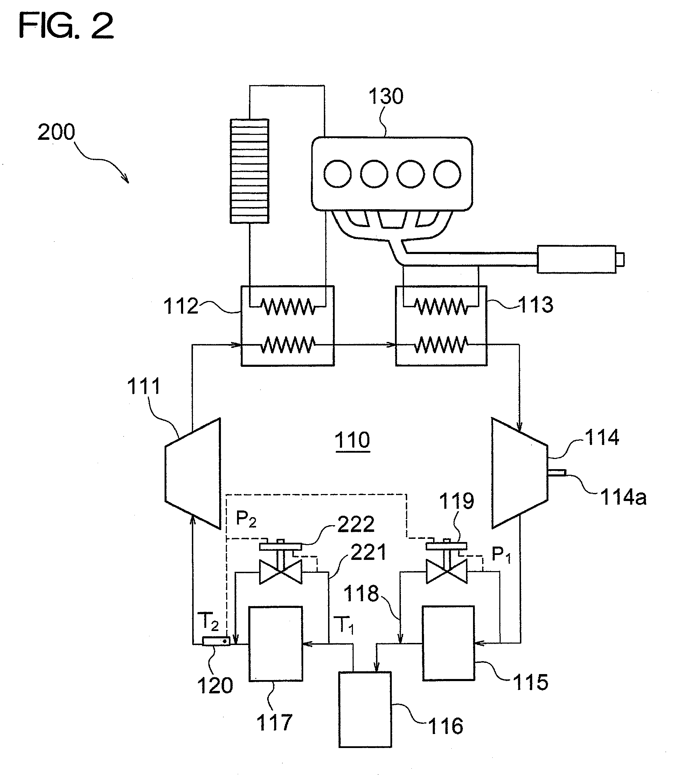

A configuration of a waste heat regeneration system 200 according to Embodiment 2 of the present invention is illustrated in FIG. 2.
The waste heat regeneration system 200 according to Embodiment 2 has a configuration in which a second bypass flow path 221 that allows the upstream side and the downstream side of the supercooler 117 to communicate with each other and a second flow control valve 222 that serves as a second opening and closing valve and a second control unit adjusting the amount of the operating fluid circulating in the second bypass flow path 221 are additionally installed in the waste heat regeneration system 100 according to Embodiment 1. In the following descriptions, since the same reference numerals are given to the components which are identical or similar to those of FIG. 1, their specific descriptions will not be repeated.

The second bypass flow path 221 bypasses the entire supercooler 117. When the degree of supercooling of the operating fluid, i.e. the temperature difference T1 - T2, is larger than a second predetermined value (for example, 10°C), the second flow control valve 222 increases its opening degree so as to increase the amount of the operating fluid which circulates in the second bypass flow path 221. As a result, the amount of the operating fluid which is supercooled while circulating in the supercooler 117 decreases, so that the temperature T2 increases and the temperature difference T1 - T2 decreases.
On the other hand, when the temperature difference T1 - T2 is smaller than the second predetermined value, the flow control valve 222 is fully closed, so that the amount of the operating fluid which circulates in the second bypass flow path 221 becomes zero. As a result, the amount of the operating fluid which is supercooled while circulating in the supercooler 117 increases, so that the temperature T2 decreases and the temperature difference T1 - T2 increases.

In the waste heat regeneration system 100 according to Embodiment 1, the lower limit value of the temperature T1 of the operating fluid on the upstream side of the supercooler 117 depends on the temperature of the waste heat of the engine 130 as the heating medium of the operating fluid, the temperature of the external air as the cooling medium of the first condenser 115, and the heat exchange rate of the first condenser 115. For this reason, depending on these conditions, the temperature T1 of the operating fluid might not decrease to a desired value and the temperature difference T1 - T2 might not decrease to the desired degree of supercooling.
In contrast, in the waste heat regeneration system 200 according to Embodiment 2, even when the temperature T1 of the operating fluid on the upstream side of the supercooler 117 may not decrease, by increasing the temperature T2 of the operating fluid on the downstream side of the supercooler 117, the temperature difference T1 - T2 may be decreased. Accordingly, the temperature difference T1 - T2 may be maintained at the second predetermined value or less and the degree of supercooling may be prevented from increasing too much.

### Embodiment 3

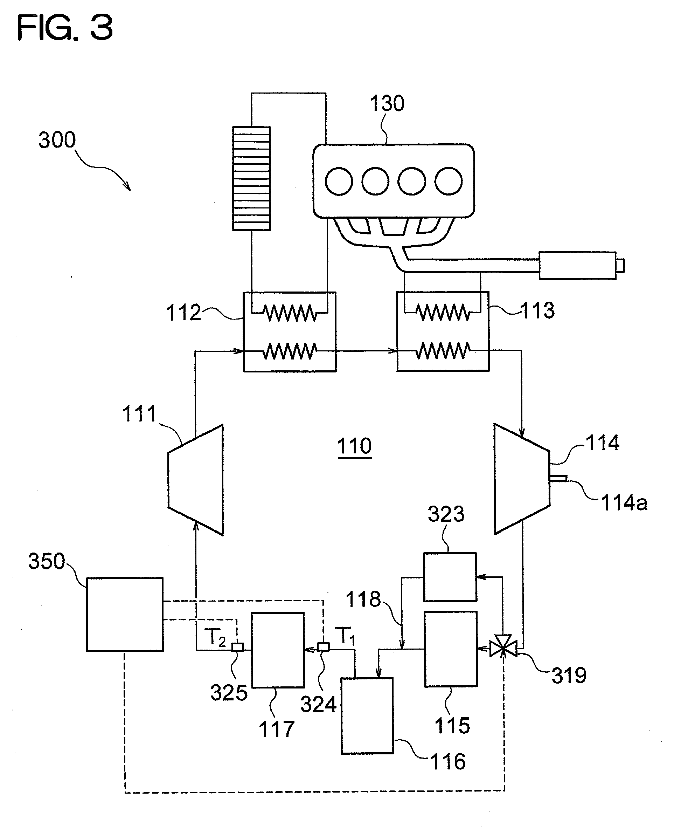

A configuration of a waste heat regeneration system 300 according to Embodiment 3 of the present invention is illustrated in FIG. 3.
The waste heat regeneration system 300 of Embodiment 3 has a configuration in which a second condenser 323 that has a heat exchange rate smaller than that of the first condenser 115 is installed in the course of the first bypass flow path 118 and an electromagnetic three-way valve 319 that serves as a first opening and closing valve is installed in the connection portion between the inlet of the first bypass flow path 118 and the pipe from the expander 114 to the fist condenser 115 in addition to the waste heat regeneration system 100 according to Embodiment 1.
A control unit 350 serving as a first control unit adjusts the amount of the operating fluid which circulates in the first bypass flow path 118 by controlling the opening degree of the electromagnetic three-way valve 319 based on the temperature difference T1 - T2 between the temperature T1 of the operating fluid detected by a temperature sensor 324 inserted into the pipe on the upstream side of the supercooler 117 and the temperature T2 of the operating fluid detected by a temperature sensor 325 inserted into the pipe on the downstream side of the supercooler 117. Since the heat exchange rate of the second condenser 323 installed in the course of the first bypass flow path 118 is smaller than that of the first condenser 115, when the amount of the operating fluid which circulates in the first bypass flow path 118 increases, the temperature T1 of the operating fluid on the upstream side of the supercooler 117 increases. In such a configuration, the same effect as that of the waste heat regeneration system 100 according to Embodiment 1 may be obtained.

### Embodiment 4

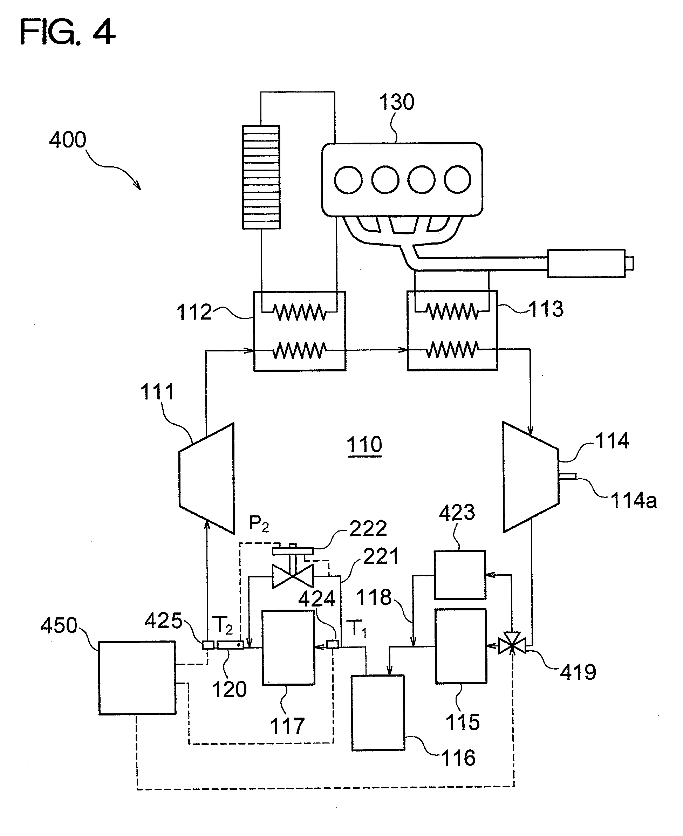

A configuration of a waste heat regeneration system 400 according to Embodiment 4 of the present invention is illustrated in FIG. 4.
The waste heat regeneration system 400 according to Embodiment 4 has a configuration in which a second condenser 423 that has a heat exchange rate smaller than that of the first condenser 115 is installed in the course of the first bypass flow path 118 and an electromagnetic three-way valve 419 that serves as a first opening and closing valve is installed in the connection portion of the inlet of the first bypass flow path 118 and the pipe from the expander 114 to the first condenser 115 in the waste heat regeneration system 200 according to Embodiment 2.
A control unit 450 serving as a first control unit adjusts the amount of the operating fluid which circulates in the first bypass flow path 118 by controlling the opening degree of the electromagnetic three-way valve 419 based on the temperature difference T1-T2 detected by temperature sensors 424 and 425. In such a configuration, the same effect as that of the waste heat regeneration system 200 according to Embodiment 2 may be obtained.

### Other Embodiments

In Embodiments 1 to 4, various methods may be used as a method of obtaining a value related to the temperature T1 of the operating fluid on the upstream side of the supercooler 117 and a value related to the temperature T2 of the operating fluid on the downstream side thereof. For example, in Embodiments 1 and 2, the temperatures T1 and T2 of the operating fluids may be detected by inserting the temperature sensors into the pipe as in the case of Embodiments 3 and 4. Further, in Embodiments 3 and 4, the temperature T1 of the operating fluid may be detected based on the pressure of the downstream side of the expander 114 and the upstream side of the pump 111 as in the case of Embodiments 1 and 2. Further, since it is considered that the temperature of the surface of the pipe is almost equal to the temperature of the operating fluid which circulates in the pipe, the temperature may be detected by attaching the temperature sensor to the surface of the pipe. Furthermore, in a case where the heat exchange rate of the supercooler 117 is sufficiently high, the temperature of the external air as the cooling medium may be detected so as to be used as the temperature T2 of the operating fluid on the downstream side of the supercooler 117.

In Embodiments 1 to 4, the first bypass flow path 118 may be installed from within the first condenser 115. Further, in Embodiments 2 and 4, the second bypass flow path 221 may be installed from within the supercooler 117.

## Claims

1. A waste heat regeneration system with a Rankine cycle device in which an operating fluid is pressure-fed by a pump, the pressure-fed operating fluid is heated by a heat exchanger with waste heat of an engine by a heat exchanger, the heated operating fluid is expanded by an expander so as to recover mechanical energy, and the expanded operating fluid is condensed by a first condenser, the waste heat regeneration system comprising:
a supercooler which is installed on the downstream side of the first condenser and the upstream side of the pump and supercools the operating fluid;
a first bypass flow path which bypasses at least a part of the first condenser;
a first opening and closing valve which adjusts the amount of the operating fluid circulating in the first bypass flow path; and
a first control unit which adjusts the opening degree of the first opening and closing valve,
wherein the first control unit increases the amount of the operating fluid circulating in the first bypass flow path by controlling the opening degree of the first opening and closing valve as a temperature difference between the temperature of the operating fluid on the upstream side of the supercooler and the temperature of the operating fluid on the downstream side thereof decreases.

2. The waste heat regeneration system according to claim 1, wherein the first control unit maintains the temperature difference between the upstream side and the downstream side of the supercooler so as to be a first predetermined value or more by adjusting the amount of the operating fluid circulating in the first bypass flow path through the control of the opening degree of the first opening and closing valve based on a value related to the temperature of the operating fluid on the upstream side of the supercooler and a value related to the temperature of the operating fluid on the downstream side thereof.

3. The waste heat regeneration system according to claim 2,
wherein a gas/liquid separator which separates the operating fluid into a gas and a liquid is installed on the downstream side of the first condenser and the upstream side of the supercooler; and
the value related to the temperature of the operating fluid on the upstream side of the supercooler is a pressure on the downstream side of the expander and the upstream side of the pump.

4. The waste heat regeneration system according to any one of claims 1 to 3, further comprising:
a second bypass flow path which bypasses at least a part of the supercooler;
a second opening and closing valve which adjusts the amount of the operating fluid circulating in the second bypass flow path; and
a second control unit which controls the opening degree of the second opening and closing valve,
wherein the second control unit increases the amount of the operating fluid circulating in the second bypass flow path by controlling the opening degree of the second opening and closing valve as a temperature difference between the temperature of the operating fluid on the upstream side of the supercooler and the temperature of the operating fluid on the downstream side thereof increases.

5. The waste heat regeneration system according to claim 4, wherein the second control unit maintains the temperature difference between the upstream side and the downstream side of the supercooler so as to be a second predetermined value or less by adjusting the amount of the operating fluid circulating in the second bypass flow path through the control of the opening degree of the second opening and closing valve based on a value related to the temperature of the operating fluid on the upstream side of the supercooler and a value related to the temperature of the operating fluid on the downstream side thereof.

6. The waste heat regeneration system according to any one of claims 1 to 5, wherein the first opening and closing valve is installed in the course of the first bypass flow path.

7. The waste heat regeneration system according to any one of claims 4 to 6, wherein the second opening and closing valve is installed in the course of the second bypass flow path.

8. The waste heat regeneration system according to any one of claims 1 to 7, wherein a second condenser having a heat exchange rate smaller than that of the first condenser is installed in the course of the first bypass flow path.
